(19) Europäisches Patentamt

European Patent Office

Office européen des brevets

(11) **EP 0 712 489 B1**

(12) **EUROPÄISCHE PATENTSCHRIFT**

(45) Veröffentlichungstag und Bekanntmachung des Hinweises auf die Patenterteilung:
**09.02.2000 Patentblatt 2000/06**

(51) Int. Cl.[7]: **G01M 3/20**

(21) Anmeldenummer: **94924757.1**

(86) Internationale Anmeldenummer:
**PCT/EP94/02309**

(22) Anmeldetag: **14.07.1994**

(87) Internationale Veröffentlichungsnummer:
**WO 95/04920 (16.02.1995 Gazette 1995/08)**

(54) **Heliumlecksuche mit FEP Membran, Getter und Differenzierstufe**

Helium leak detection with FEP membrane, getter, and differential circuit

Détection de fuites par helium avec un diaphragme FEP, un getter et un circuit à différentiateur

(84) Benannte Vertragsstaaten:
**CH DE FR GB IT LI**

(30) Priorität: **05.08.1993 DE 4326264**

(43) Veröffentlichungstag der Anmeldung:
**22.05.1996 Patentblatt 1996/21**

(73) Patentinhaber:
**LEYBOLD AKTIENGESELLSCHAFT**
**50968 Köln (DE)**

(72) Erfinder:
• **VOSS, Günter**
**D-53804 Much (DE)**
• **SCHOROTH, Anno**
**D-53639 Königswinter (DE)**

(74) Vertreter:
**Leineweber, Jürgen, Dipl.-Phys.**
**Aggerstrasse 24**
**50859 Köln (DE)**

(56) Entgegenhaltungen:
**EP-A- 0 352 371**        **EP-A- 0 432 305**
**WO-A- 88/04774**        **FR-A- 1 181 312**
**US-A- 4 459 844**        **US-A- 4 492 110**

• **DATABASE WPI Section EI, Week 8750, Derwent Publications Ltd., London, GB; Class S02, AN 87-354697 & SU,A,1 310 657 (KRYAKOVKIN V P) 15. Mai 1987**

**Beschreibung**

Die Erfindung bezieht sich auf ein Heliumlecksuchgerät und ein entsprechendes Verfahren zum Betrieb. Ein Heliumlecksuchgerät nach dem ersten Teil des Anspruchs 1 ist aus der FR-A-1181312 bekannt.

Bei der hochempfindlichen Lecksuche kommt als Testgas im wesentlichen nur Helium in Frage. Bei Heliumlecksuchgeräten werden üblicherweise auf die Masse des Heliums eingestellte Massenspektrometer als Detektoren verwendet. Zum Betrieb eines Massenspektrometers ist ein Hochvakuumpumpsystem (Hochvakuumpumpe, Vorpumpe usw.) erforderlich, mit dessen Hilfe außerdem das bei einer positiven Prüfung in das Massenspektrometer eingetretene Helium entfernt wird (vgl. zum Beispiel die DE-A-34 21 533).

Aus der EP-A-352 371 ist ein Heliumleckdetektor der hier betroffenen Art bekannt. Als Vakuumpumpe wird eine Ionengetterpumpe verwendet. Selbst relativ kleine Ionengetterpumpen sind schwer und deshalb unhandlich.

Auch aus der WO-A1-884 774 ist ein Testgasdetektor der oben erwähnten Art bekannt. Als im Bereich des Gaseinlasses befindliches Mittel, das dem bevorzugten Durchlass von Testgas und dem Zurückhalten anderer Gase dient, ist eine "entrainment pump" vorgesehen, die eine Getter- oder Kryopumpe sein kann. Dieses Mittel ist überaus aufwendig und teuer. Es erhöht den Aufwand für die Vakuumerzeugung bei Testgasdetektoren erheblich, da neben der einlassseitigen "entrainment pump" auch noch eine Hochvakuumpumpe (Diffusions- oder Turbomolekularvakuumpumpe) und eine mechanische Vorvakuumpumpe, beide für den Betrieb des Massenspektrometers (Testgasregistrier-gerät) notwendig, erforderlich sind.

Der vorliegenden Erfindung liegt die Aufgabe zugrunde, einfache und preiswerte Bauteile ersetzen zu Können.

Erfindungsgemäß geschieht dies nach den Ansprüchen 1,5.

Die Vakuumpumpe hat die besondere Eigenschaft, nur die das Testgas begleitenden Komponenten zu pumpen. Da bei dieser Lösung die Vakuumpumpe das Testgas selbst nicht pumpt, tritt eine Testgasakkumulation und damit eine Druckerhöhung ein. Bereits mit einem ausreichend empfindlichen Druckmessgerät lässt sich diese Druckerhöhung feststellen und: zur Messwertbildung heranziehen.

Bei dem Verfahren zum Betrieb wird der durch Argon verursachte, langsam und stetig zunehmende Druckanstieg von dem durch Helium verursachten, kurzzeitigen Druckanstieg durch differentielle Auswertung unterschieden.

Weitere positive Messungen bewirken weitere Druckerhöhungen, so daß auch die Standzeit eines Heliumdetektors nach diesem Vorschlag begrenzt ist. Um ausreichend lange Standzeiten zu erzielen, muß deshalb einerseits das Einlaßsystem so ausgebildet sein, dag es praktisch nur für Helium durchlässig ist, damit durch andere Gase erwirkte Druckerhöhungen vermieden sind. Zum anderen muß das Druckmeßgerät extrem empfindlich sein, damit sehr kleine Druckerhöhungen registriert, bis zur Erreichung der oberen Druckgrenze also möglichst viele Leckmessungen durchgeführt werden können.

Das Gaseinlaßsystem umfaßt eine aus FEP (Perfluorethylenpropylen) Polymermembran, die das Hochvakuum von einem Testvolumen oder einem Probengasstrom trennt. Bei Polymeren handelt es sich um eine Werkstoffklasse, die in Handbüchern ausführlich beschrieben ist. Aufgrund der zu jedem Werkstoff dieser Klasse angegebenen Permeationseigenschaften vermag der Fachmann jeweils einen Membranwerkstoff auszuwählen, der die gewünschten selektiven Eigenschaften hat. Die jeweils gewünschte selektive Eigenschaft - z.B. der bevorzugte Durchlaß von Testgas - sollte möglichst ausgeprägt vorhanden sein, damit die gewünschte Wirkung - Unterdrückung von anderen Gasen, Verunreinigungen usw. - möglichst gut erreicht wird.

Das Material und die geometrischen Abmessungen sind so zu wählen, daß weiter unten noch beschriebene Grenzleitwerte nicht überschritten werden. Als zweckmäßig hat sich FEP erwiesen, das Helium sehr gut, die Begleitgase jedoch nur moderat permeieren läßt, so daß sich der gewünschte Helium-Anreicherungseffekt ergibt. Als Gaseinlaß kann auch Quarzglas eingesetzt werden, wie es beispielsweise in der EP-A-3 52 371 offenbart ist. Bei erhöhter Temperatur ist Quarzglas nur für Helium durchlässig.

Ein ausreichend empfindliches Druckmeßgerät ist zum Beispiel das Massenspektrometer. Ist es auf die Masse des Heliums eingestellt, dann liefert es einen dem Helium-Partialdruck proportionalen Ionenstrom. Bei herkömmlichen Lecksuchgeräten ergibt sich dadurch ein der Leckrate proportionales Ionenstrom-Signal. Wird es jedoch bei einem Heliumdetektor der erfindungsgemäßen Art eingesetzt, dann repräsentiert der Ionenstrom im wesentlichen nur die Vorgeschichte, d.h., die während vorhergegangener Messungen über die Zeit akkumulierte Heliummenge. Bei einer weiteren positiven Messung ändert sich der Ionenstrom nur um einen sehr kleinen Betrag. Die Leckrate $q_{he}$ ist deshalb durch einen Differentialquotienten gegeben, nämlich:

$$q_{He} = a \cdot \frac{dI}{dt}$$

Es ist deshalb zweckmäßig, das vom Massenspektrometer abgegebene Stromsignal einem hochempfindlichen Strom-/ Spannungswandler zuzuführen. Dieser ist im Rahmen der vorliegenden Erfindung zweckmäßig als Differenzierstufe ausgebildet, deren Verstärkung mit steigender Frequenz zunimmt. Die passiven Elemente der Differenzierstufe sind so zu bemessen, daß für charakteristische Zeiten im Meßbetrieb bzw. für die dazu korrespondierenden Frequenzen die Differentiationsbedingungen weitgehend erfüllt sind.

Eine Vakuumpumpe, die die Eigenschaft hat, im wesentlichen alle Gase - bis auf Helium - zu pumpen, kann beispielsweise eine Adsorptionspumpe mit einem geeigneten Getterstoff sein (zum Beispiel eine Zr-V-Fe-Mischung oder das Aktivgettermaterial SAES 701). Gettermaterialien dieser Art pumpen nur reaktive Komponenten, also vorwiegend Stickstoff, Sauerstoff und Wasserdampf. Gegenüber Edelgasen, insbesondere Helium, verhält es sich passiv. Gettermodule der erwähnten Art, die nur wenige g eines geeigneten Getterstoffes benötigen, sind im Vergleich zu Hochvakuumpumpen, wie Diffusionspumpen, Turbomolekularpumpen, Ionengetterpumpen usw., leicht, klein und preiswert.

Weitere Vorteile und Einzelheiten der Erfindung sollen anhand der Figuren 1 bis 5 erläutert werden, wobei die Anordnungen nach den Figuren 1, 3, 4, nicht beansprucht sind. Es zeigen

-   Figur 1 einen Testgasdetektor mit einer Adsorptionspumpe als Vakuumpumpe,

-   Figur 2 ein Ausführungsbeispiel nach der Erfindung mit einer Kammer,

-   Figur 3 ein modifiziertes Beispiel

-   Figur 4 ein weiteres Beispiel mit einer Meßwertbildung über eine Differenzierstufe und

-   Figur 5 ein Schaltbeispiel für die Differenzierstufe.

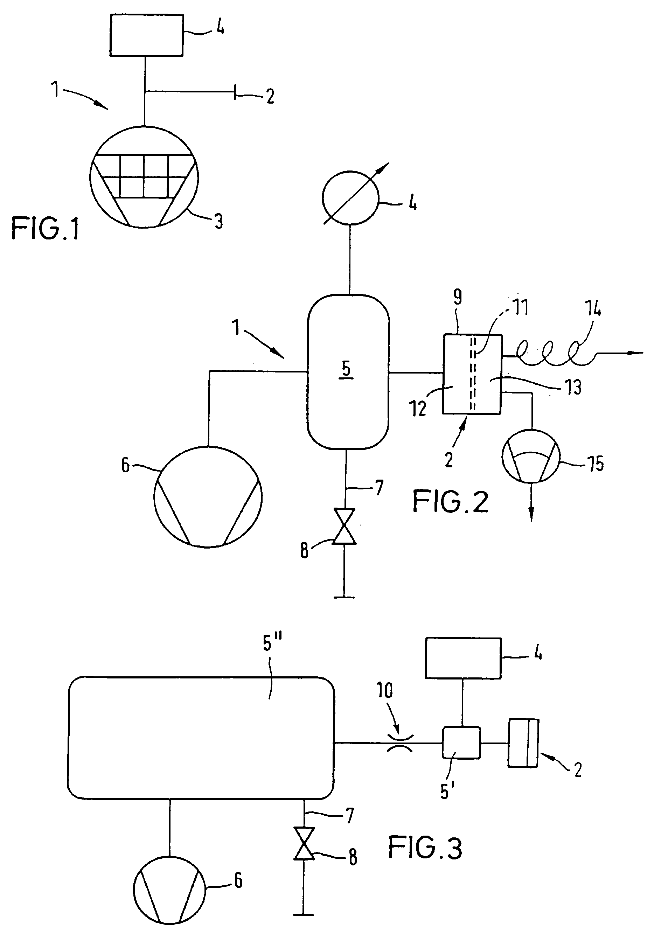

Der Testgasdetektor 1 nach Figur 1 umfaßt den Gaseinlaß 2, an den eine Testkammer, ein Schnüffler oder auch ein Testkörper selbst anschließbar ist, die als Adsorptionspumpe ausgebildete Vakuumpumpe 3 und das Testgasregistriergerät 4, das beispielsweise als auf die Masse des Testgases eingestelltes Massenspektrometer ausgebildet ist. Sich anschließende Mittel zur Verarbeitung und zur Anzeige der Meßwerte sind nicht dargestellt.

Der in der Vakuumpumpe befindliche Getterstoff sollte bei der Ausführung nach Figur 1 möglichst alle durch den Einlaß 2 gelangenden Gase, einschließlich des Testgases, pumpen. Solange die Adsorptionspumpe einen Druck aufrechterhält, der den Betrieb des Massenspektrometers 4 ermöglicht, ist der Testgasdetektor einsatzbereit. Zweckmäßig ist der Einlaß 2 so gestaltet, daß er nur für das Testgas durchlässig ist. Eine Belegung des Getterstoffes durch andere Gase bzw. eine unerwünscht schnelle Abnahme des Saugvermögens der Adsorptionspumpe können dadurch vermieden werden.

Beim Ausführungsbeispiel nach Figur 2 ist eine Kammer 5 vorgesehen, an die der Einlaß 2, das Testgasregistriergerät 4 und die Vakuumpumpe 6 angeschlossen sind. Zusätzlich ist eine Leitung 7 mit dem Ventil 8 vorgesehen, über welche die Kammer 5 evakuierbar ist. Bestandteil des Einlasses 2 ist die Kammer 9, die von der Membran 11 in zwei Räume 12 und 13 aufgeteilt ist. Der Raum 12 steht mit der Vakuumkammer 5 in Verbindung. An den Raum 13 ist ein Schnüffelschlauch 14 angeschlossen, über den beim Schnüffelbetrieb auf Testgas zu untersuchendes Gas mit Hilfe der Förderpumpe 15 angesaugt und durch den Raum 13 gefördert wird.

Als Vakuumpumpe 6 ist allgemein das Symbol für eine Vakuumpumpe beliebiger Art dargestellt. Sie soll beim Ausführungsbeispiel nach Figur 2 die Eigenschaft haben, im wesentlichen alle Gase - bis auf das Testgas - abzupumpen. Eine solche Eigenschaft haben Adsorptionspumpen mit den bereits oben erwähnten Getterstoffen. Beispielsweise pumpt Aktivgettermaterial SAES 701 nur reaktive Komponenten, also überwiegend Stickstoff, Sauerstoff und Wasserdampf. Gegenüber Edelgasen - hier Argon und Helium - verhält es sich passiv. Durch die Membran 11 in die Kammer 5 eindringendes Helium bewirkt also eine Druckerhöhung in der Kammer 5. Diese Druckerhöhung kann mit einem empfindlichen Druckmeßgerät 4 festgestellt werden.

Beim Ausführungsbeispiel nach Figur 3 ist die Kammer 5 ersetzt durch eine erste Kammer 5' mit relativ kleinem Volumen, an welche der Einlaß 2 und das Testgasregistriergerät 4 angeschlossen sind, durch eine zweite Kammer 5" mit relativ großem Volumen, an welche die Vakuumpumpe 6 angeschlossen ist, und durch eine die Kammern 5', 5" verbindende Leitung mit der Drossel 10, die einen sehr kleinen Leitwert hat. Die Kammern 5', 5" sowie die Drossel 10 sind so zu bemessen, daß das kleine Volumen auf die bei der Lecksuche auftretenden Gasmengen in kurzer Zeit mit hohen Druckanstiegen (Steigerung der Empfindlichkeit) reagiert. Das große Volumen sichert eine lange Betriebszeit. Wegen des kleinen Leitwerts der Verbindung wird es in einer Zeit, die lang gegen die zu erwartenden Änderungen im Meßbetrieb sind, natürlich wieder im Gleichgewicht mit dem kleinen Volumen sein. Der Empfindlichkeitsgewinn entspricht etwa dem Verhältnis der beiden Volumina.

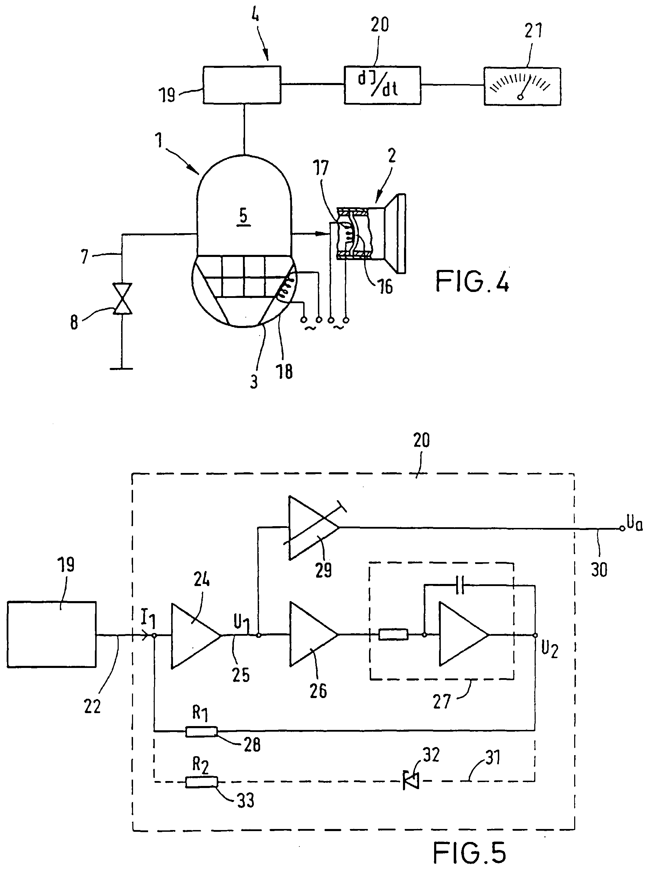

Beim Ausführungsbeispiel nach Figur 4 sind Adsorptionspumpe 3 und Kammer 5 integriert. Bestandteil des Gaseinlasses 2 ist ein Anschlußstutzen mit einem Quarzfenster 16, das mittels einer Heizung 17 beheizbar ist. Das Quarzfenster 16 bildet direkt das Interface zu einem Behälter (zum Beispiel Lecktestkammer, Sputterapparatur usw.), der in Bezug auf das Auftreten von Helium zu überwachen ist. Bei Zimmertemperatur ist Quarzglas gasundurchlässig; bei erhöhter Temperatur (ca. 900°C) ist es für Helium durchlässig.

Auch die Adsorptionspumpe 3 ist mit einer Heizung 18 ausgerüstet, mit deren Hilfe der Getterstoff aktiviert wird. Auch bei diesem Ausführungsbeispiel ist ein Getterstoff gewählt, der im wesentlichen nur reaktive Gase pumpt.

Als Druckmeßgerät 4 ist ein nur als Block dargestelltes Massenspektrometer 19 vorhanden. Über die Differenzierstufe 20 erfolgt die Darstellung des Meßwertes auf der Anzeige 21.

Um einen Testgasdetektor nach den Figuren 2, 3 oder 4 in Betrieb zu nehmen, wird zunächst die Kammer 5 (bzw. die Kammern 5', 5") über die Leitung 7 mit dem Ventil 8 mit Hilfe einer konventionellen Hochvakuumpumpe evakuiert. Nach dem Erreichen eines Druckes von ca. $10^{-5}$ mbar wird das Gettermaterial nach den Herstellempfehlungen aktiviert. Beim Ausführungsbeispiel nach Figur 4 erfolgt diese Aktivierung durch Beheizung des Getterstoffes für einen bestimmten Zeitraum (z.B. 20 Minuten) auf eine erhöhte Temperatur (z.B. 450°C). Anschließend wird das Ventil 8 geschlossen und die Temperatur des Getterstoffes auf die Betriebstemperatur (z.B. 200°C) erniedrigt. Die Hochvakuumpumpe ist danach nicht mehr erforderlich. Bei der Einhaltung bestimmter, weiter unten noch erwähnter Grenzleitwerte können Betriebszeiten von einem Jahr und mehr erreicht werden. Danach muß der beschriebene Vorgang wiederholt werden. Dieser Schritt stellt eine Regeneration dar, da die akkumulierten Gase abgesaugt werden und danach die Sorptionssubstanz wieder zur Verfügung steht. Erst nach dem Erreichen der Kapazitätsgrenze der Sorptionssubstanz muß diese ausgetauscht werden.

Wesentlich ist, daß das Einlaßsystem 2 so geringe Gasmengen einläßt, daß sich akzeptable Meßzeiten ergeben. Bei Versuchen wurde von einem Jahr ausgegangen. Geht man außerdem von der Benutzung einer aus FEP bestehenden Membran 11, von einem zulässigen Argondruck von $10^{-5}$ mbar und von einem Volumen der Kammer 5 von einem Liter aus, dann darf bei einer Standzeit von einem Jahr der permanente Argonfluß $3 \times 10^{-13}$ mbar $ls^{-1}$ nicht überschreiten. Da Argon mit etwa 1 % in der Luft enthalten ist, beträgt der Grenzleitwert des Systems für Argon also dreimal $10^{-13}$ $LS^{-1}$. Ähnliche Überlegungen führen zu den Grenzleitwerten für Stickstoff, Sauerstoff und Wasserdampf. Da das Gettermaterial Helium und Argon nicht pumpt, steigt der Druck ständig an. Diese Druckzunahme ist jedoch so gering, daß Betriebszeiten von einem Jahr und mehr möglich sind. Wesentlich ist nur, den bei positiven Leckmessungen auftretenden, durch Helium verursachten Druckanstieg erkennen zu können. Hierzu wird ein weiter unten beschriebenes Meßverfahren vorgeschlagen. Um bei Stillstand die kontinuierliche Permeation von Argon und Helium aus der Luft zu unterbinden, wird die Membran verschlossen. Dies kann mit einem geeigneten Ventilmechanismus oder durch Beaufschlagen der Membran mit einem Gas hohen Molekulargewichtes (z.B. $SF_6$), das nicht mehr permeiert, geschehen. Dadurch wird die zur Verfügung stehende effektive Meßzeit erhöht.

Das System zeichnet sich durch eine hohe Selektivität für Helium aus. Sowohl Membran als auch das Gettermaterial stellen Anreicherungsmechanismen dar. Für weniger anspruchsvolle Ausführungen kann das Massenspektrometer durch ein Ionisationsmanometer ersetzt werden, das den ansteigenden Heliumpartialdruck vor dem gleichmäßig ansteigenden Argondruck erkennen kann.

Das verwendete Gettermaterial pumpt auch Wasserstoff. Das Gasspektrum im Massenspektrometer zeigt deshalb nur eine sehr kleine Wasserstoffamplitude. Damit entschärft sich die klassische Forderung nach hoher Trennschärfe zwischen Masse 2 und 4 erheblich. Statt des üblichen Sektorfeldmassenspektrometers können somit auch billige kleine Quadrupole mit geringerer Auflösung eingesetzt werden.

Die beschriebene Abschätzung geht von der Verwendung einer aus FEP bestehenden Polymermembran aus, die Helium und Argon durchläßt. Die Verwendung eines beheizbaren Quarzfensters ist insoweit vorteilhafter, als beheiztes Quarzglas nur für Helium durchlässig ist.

Ein Beispiel für eine Differenzierstufe 20 ist in Figur 4 dargestellt. Sie ist dem Massenspektrometer 19 nachgeschaltet und umfaßt den Eingangs(Operations-)verstärker 24, dessen Ausgang 25 über einen invertierenden Verstärker 26 und einen invertierenden Integrator 27 und einen Widerstand $R_1$ 28 mit dem Eingang 22 verbunden ist.

Der Ausgang 25 des Eingangsverstärkers wird über einen Verstärker 29 (mit wählbarem) Verstärkungsfaktor $V_a$ an den Ausgang 30 der Differenzierstufe gelegt.

$$\text{Es gilt: } U_a = V_a \cdot U_1 \qquad \text{(Gl. 1)}$$

Wegen des relativ geringen Eingangsstrom des Eingangsverstärkers 24 gilt der Zusammenhang $U_2 = R_1 \cdot I_1$ (Gl.2). Die Ausgangsspannung des Integrators ist

$$U_2 = V_I \cdot U_1(t)dt. \qquad \text{(Gl.3)}$$

Durch Differenzieren dieser gleichung ergibt sich

$$\frac{dU_2(t)}{dt} = V_I \cdot U_1(t).$$

Nach Umstellen und Einsetzen der Gleichungen 1 und 2 gilt für

$$U_a(t) = -\frac{V_a}{V_I} \cdot R_1 \cdot \frac{dI_1(t)}{dt}$$

Damit ist die Ausgangsspannung der Differenzierstufe gleich der zeitlichen Ableitung des zu messenden Stromes des Massenspektrometers. Der durch den gleichmäßig ansteigenden Argondruck ebenfalls ständig steigende Meßstrom wird sich am Ausgang der Differenzierstufe als konstante Spannung aus, die gegebenenfalls subtrahiert werden kann.

Eine evtl. erforderliche Bereichsumschaltung kann über den Zwei 31 erfolgen, indem bei zunehmender Ausgangsspannung des Integrators ein Widerstand $R_2$ (33), dessen Wert kleiner als $R_1$ ist, auf den Eingang der Differenzierstufe geschaltet wird.

Das Zuschalten kann beispielsweise spannungsabhängig über eine Zener-Diode 32 erfolgen. Eine Verringerung der Übertragungskonstante der Differenzierstufe kann durch entsprechende Vergrößerung der Verstärkung des Verstärkers 29 erfolgen.

Die Vorteile der oben beschriebenen Realisierung einer Strom-Differenzierstufe lassen sich wie folgt zusammenfassen:

- Der empfindliche Eingangsverstärker braucht nicht den vollen Untergrundstrom zu verstärken.

- Das differenzierende Element ist nicht unmittelbar mit dem hochohmigen Eingangskreis verbunden; dadurch vereinfacht sich das Design für eine Bereichsumschaltung.

- Eine Auslegung des Verstärkers als allgemeines Filter erlaubt weitergehende Anpassungen bezüglich Rauschen, Drift und anderer Störquellen an die eigentliche Meßaufgabe.

### Patentansprüche

1. Hellumlecksuchgerät mit einem Testgasdetektor (4), der mit einem Gaseinlass (2) und einer Auswerteeinrichtung (20, 21) ausgerüstet ist und an den eine Vakuumpumpe (3, 6) angeschlossen ist, wobei der Gaseinlass (2) als selektiver Gaseinlass, der Testgasdetektor (4) als Druckmessgerät und die Vakuumpumpe (3, 6) als Adsorptionsvakuumpumpe ausgebildet sind, <u>dadurch gekennzeichnet,</u> dass der selektive Gaseinlass (2) mit einer aus FEP bestehenden Polymermembran (11) ausgerüstet ist, die die Eigenschaft hat Helium und Argon durchzulassen, dass der Getterstoff in der Adsorptionspumpe (3, 6) die Eigenschaft hat nur reaktive Komponenten, vorwiegend Stickstoff, Sauerstoff und Wasserstoff, zu pumpen und sich passiv gegenüber Edelgasen zu verhalten, und dass Bestandteil der Auswerteeinrichtung eine Differenzierstufe (20) ist, deren Ausgangsspannung gleich der zeitlichen Ableitung des vom Druckmessgerät (4) gemessenen Stromes ist.

2. Heliumlecksuchgerät nach Anspruch 1, <u>dadurch gekennzeichnet,</u> dass das Druckmessgerät (4) ein Massenspektrometer ist.

3. Heliumlecksuchgerät nach Anspruch 1 oder 2, <u>dadurch gekennzeichnet,</u> dass es eine Kammer (5) umfasst, an die die Vakuumpumpe (3, 6), der Gaseinlass (2) und das Testgasregistriergerät (4) angeschlossen sind.

4. Heliumlecksuchgerät nach Anspruch 3, <u>dadurch gekennzeichnet,</u> dass an Stelle der Kammer (5) eine erste Kammer (5') mit relativ kleinem Volumen und eine zweite Kammer (5'') mit relativ großem Volumen vorgesehen sind, die über eine Leitung mit einer Drossel (10) verbunden sind.

5. Verfahren zum Betrieb eines Heliumlecksuchgerätes nach einem der Ansprüche 1-4 wobei der durch Argon verursachte, langsam und stetig zunehmende Druckanstieg vom durch Helium verursachten, kurzzeitigen Druckanstieg durch differentielle Auswertung unterschieden wird.

6. Verfahren nach Anspruch 5, wobei der Gaseinlass (2) im Stillstand mit Hilfe eines Ventiles oder durch Beaufschlagung mit einem undurchlässigen Gas verschlossen wird.

7. Verfahren nach Anspruch 5 oder 6, wobei zum Zwecke der Inbetriebnahme das System zunächst mit Hilfe einer externen Vakuumpumpe evakuiert und danach die Vakuumpumpe (3, 6) aktiviert wird.

8. Verfahren nach einem der Ansprüche 5, 6 oder 7, wobei zur Regeneration des Systems die akkumulierten Gase abgepumpt werden.

### Claims

1. Helium leak detector comprising a test gas detector (4) which is equipped with a gas inlet (2) and an evaluation device (20, 21) and to which a vacuum pump (3, 6) is connected, wherein the gas inlet (2) is designed as selective gas inlet, the test gas detector (4) is designed as pressure measuring instrument and the vacuum pump (3, 6) is designed as adsorption vacuum pump, characterized in that the selective gas inlet (2) is equipped with a polymer membrane (11) which is composed of FEP and which has the property of transmitting helium and argon, in that the getter material in the adsorption pump (3, 6) has the property of pumping only reactive components, primarily nitrogen, oxygen and hydrogen and behaves passively towards noble gases, and in that a component of the evaluation device is a differentiating stage (20) whose output voltage is equal to the time derivative of the current measured by the pressure gauge (4).

**2.** Helium leak detector according to Claim 1, characterized in that the pressure measuring instrument (4) is a mass spectrometer.

**3.** Helium leak detector according to Claim 1 or 2, characterized in that it comprises a chamber (5) to which the vacuum pump (3, 6), the gas inlet (2) and the test gas recording instrument (4) are connected.

**4.** Helium leak detector according to Claim 3, characterized in that, instead of the chamber (5), a first chamber (5') having a relatively small volume and a second chamber (5'') having a relatively large volume are provided which are connected via a line to a throttle (10).

**5.** Method for operating a helium leak detector according to one of Claims 1-4, wherein the slowly and steadily increasing pressure rise due to argon is differentiated from the short-term pressure rise due to helium by differential evaluation.

**6.** Method according to Claim 5, wherein the gas inlet (2) is sealed during shut-down with the aid of a valve or by exposure to an impermeable gas.

**7.** Method according to Claim 5 or 6, wherein, for the purpose of starting up, the system is first evacuated with the aid of an external vacuum pump and then the vacuum pump (3, 6) is activated.

**8.** Method according to one of Claims 5, 6 or 7, wherein the accumulated gas is pumped out to regenerate the system.

**Revendications**

**1.** Appareil de détection de fuites par hélium, comprenant un détecteur de gaz test (4), pourvu d'une entrée de gaz (2) et d'un dispositif d'évaluation (20, 21), et auquel est raccordée une pompe à vide (3, 6), ladite entrée de gaz (2) étant réalisée sous forme d'une entrée de gaz sélective, ledit détecteur de gaz test (4) étant réalisé sous la forme d'un appareil de mesure de pression, et ladite pompe à vide (3, 6) étant réalisée sous la forme de pompe à vide à adsorption, caractérisé en ce que l'entrée de gaz sélective (2) est équipée d'une membrane polymère (11) réalisée en FEP, présentant la propriété de laisser passer l'hélium et l'argon, en ce que le produit getter dans la pompe à adsorption (3, 6) présente la propriété de pomper uniquement des composants réactifs, principalement de l'azote, de l'oxygène et de l'hydrogène, et de se comporter de façon passive vis-à-vis des gaz rares, et en ce qu'un composant du dispositif d'évaluation est un circuit de différenciation (20) dont la tension de sortie est égale à la dérivée temporelle du courant mesuré par le dispositif de mesure de pression (4).

**2.** Appareil de détection selon la revendication 1, caractérisé en ce que le dispositif de mesure de pression (4) est un spectromètre de masse.

**3.** Appareil de détection selon l'une ou l'autre des revendications 1 et 2, caractérisé en ce qu'il comprend une chambre (5) à laquelle sont raccordés la pompe à vide (3, 6), l'entrée de gaz (2) et le dispositif d'enregistrement de gaz test (4).

**4.** Appareil de détection selon la revendication 3, caractérisé et en ce qu'il est prévu à la place de la chambre (5) une première chambre (5') avec un volume relativement petit et une deuxième chambre (5'') avec un volume relativement grand, lesquelles sont reliées via une conduite avec un étranglement (10).

**5.** Procédé pour le fonctionnement d'un appareil de détection de frite par hélium selon l'une des revendications 1 à 4, dans lequel on procède, par évaluation différentielle, à la distinction entre la montée en pression lente et constamment croissante provoquée par l'argon et la montée en pression brève provoquée par l'hélium.

**6.** Procédé selon la revendication 5, dans lequel l'entrée de gaz (2) est obturée à l'arrêt à l'aide d'une soupape, ou bien par alimentation au moyen d'un gaz imperméable.

**7.** Procédé selon l'une ou l'autre des revendications 5 et 6, dans lequel, dans le but de la mise en service, on évacue tout d'abord le système à l'aide d'une pompe à vide externe, et la pompe à vide (3, 6) est ensuite activée.

**8.** Procédé selon l'une des revendications 5, 6 ou 7, dans lequel les gaz accumulés sont pompés pour la régénération du système.

FIG.1

FIG.2

FIG.3

FIG.4

FIG.5